# EUROPEAN PATENT APPLICATION

(11) **EP 1 667 382 A1**
(43) Date of publication of application: **07.06.2006**
(21) Application number: 03818656.5
(22) Date of filing: 11.09.2003
(51) Int. Cl.: H04L 12/56, H04L 12/66

(54) **PACKET RELAY DEVICE**

(71) Applicant: FUJITSU LIMITED, Kawasaki-shi, Kanagawa 211-8588 (JP)
(72) Inventor: NOMURA, Yuji FUJITSU LIMITED, Kawasaki-shi, Kanagawa 211-8588 (JP); YAMANE, S. FUJITSU LIMITED,, Kawasaki-shi, Kanagawa 211-8588 (JP); USHIKI, Kazumasa FUJITSU LIMITED, Kawasaki-shi, Kanagawa 211-8588 (JP); KUROSE, Yoshitoshi FUJITSU LIMITED, Kawasaki-shi, Kanagawa 211-8588 (JP); FUKAZAWA, Mitsunori FUJITSU LIMITED, Kawasaki-shi, Kanagawa 211-8588 (JP)
(74) Representative: HOFFMANN EITLE
(86) International application number: PCT/JP2003/011623
(87) International publication number: WO 2005/027438

(57) **Abstract**

An IP packet relay apparatus providedbetween networks to relay an IP packet relating to a host belonging to a specific group, comprising: a list in which an IP address possessed by a host is associated with a group identifier for identifying a group to which the host belongs; a judgment unit judging whether an IP packet that has received from one network and is addressed to a host connected to another network is an IP packet relating to the same group or not with reference to the list; and a forwarding unit relaying an IP packet judged to be the IP packet relating to the same group.

## Description

### TECHNICAL FIELD

The present invention relates to a technology of providing a closed network by grouping arbitrary hosts connected via a communication network in a virtual manner.

### BACKGROUND ART

IP (Internet Protocol) networks have been coming into general use at a rapid pace. The IP networks are accordingly being connected with hosts other than personal computers (PCs) (for example, devices such as household electrical appliances capable of IP communications) . The IP networks that are conventionally used mainly by high-functional personal computers (PCs) are being followed by ones that are used for controlling household electrical appliances or transmitting/receiving content between the IP-compatible household electrical appliances. As the devices capable of IP-based communications (hereinafter, referred to as "hosts") increase in number and vary in type, the IP networks are being connected with more hosts that have not conventionally been connected thereto with lower functionality than the PCs in particular.

The increase in the number of hosts causes the need for grouping many hosts to simplify management of the hosts. Alternatively, the increase in the number of low-functional hosts causes the need for implementing communications between groups by such a simple method as to reduce loads on the hosts. The grouping has an effect that, for example, a given host can be retrieved from a refined search range, thereby reducing a processing amount and time necessary for a search. Meanwhile, the grouping allows hosts belonging to a given group to be distinguished from ordinary hosts, which serves to ensure security by permitting only members to access a given host from outside.

According to prior art, to have an arbitrary number of IP hosts formed into a group, the hosts belonging to the group generally register one another as group members and perform communications with one another. In this case, every host belonging to the group needs the following means:
1. a member list of members belonging to the same group;
2. a function of registering/deleting a host in/from the member list, and a function of sharing/synchronizing the member list;
3. authentication means for authenticating a user based on the member list; and
4. means for distinguishing between communications from a host included in the member list and those from a host that is not a member.

Note that references relating to address conversion include Non-patent Documents 1 and 2. In addition, references relating to a VPN include Non-patent Documents 3 and 4.
Non-patent Document 1
   RFC1631
Non-patent Document 2
   RFC2391
Non-patent Document 3
   NS2001-263 (Information Systems Society NS) 2002.3, "A Design of Distributed VPN suitable for Accessing Multiple Networks", Yoshitake TAJIMA (NTT)
Non-patent Document 4
   NS2001-262 (Information Systems Society NS) 2002.3, "A Scheme to provide Multi-VPN Services using a Virtual Networking Service Platform (VNSP)", Taisuke OKA (NTT), et al.
Patent Document 5
   JP 2001-268125 A

The prior art has a problem in that a host requires high implementing cost, and there is no scalability for the number of hosts. First, the functions described in the above items 1 to 4 need to be implemented in all hosts that participate in a group. In particular, functions involved in authentication of a user or restriction of communications are implemented by a dedicated device such as a firewall or a gateway, which extremely increases the implementing cost. It is difficult to implement those functions in household electrical appliances such as an air conditioner, a washing machine, and a video recorder/player, and mobile terminals such as a mobile phone and a PDA (Personal Digital Assistance) each having poor communication /calculation resources.

For example, a process for checking whether each IP packet has been received from an authenticated host or not increases in proportion to the number of received packets and the number of members , which leads to a problem in that process loads on each host become heavier to hinder scaling.

Second, in this method, communications are performed among hosts in full mesh, so messages to be processed on each host increase in number in proportion to the increased number of the hosts. For example, every time the members participating in a group increase or decrease in number, each host needs to update a member list. A message regarding the member change is transmitted to all the hosts, which leads to a problem in that process loads on both transmitting hosts and receiving hosts become heavier to hinder scaling.

In view of the above, there is a demand for a technology of grouping hosts which allows scaling with minimum loads on the hosts. The technology has the following three specific requirements that:
1. a TCP/IP protocol stack or an existing application is not changed at all on a host;
2. an application that uses a function of grouping hosts use only an existing TCP/IP function; and
3. only an authenticated host be able to access a group member, that is, a given host recognize itself as being accepting communications only from authenticated hosts.

Further, it is desirable that the additional functions satisfy the following requirements that:
1. group formation and member registration be automatically executed;
2. both global and private addresses are available without restrictions on an address space;
3. an individual authentication function other than an IP address be provided because IP addresses do not uniquely correspond to hosts via DHCP or the like; and
4. a group is easily identified by an application on a host.

### DISCLOSURE OF THE INVENTION

It is an object of the present invention to implement closed communications within a group without increasing processing loads on hosts even if group members increase in number.

The present invention has been made to resolve the above-mentioned problems. A packet relay apparatus located at a boundary between a local network and a global network in an IP network composed of IP hosts having global addresses or private addresses, in which arbitrary hosts are selected and formed into a group to implement closed communications within the group, includes: a list composed of IP addresses and host names for managing the group for managing hosts belonging to the group; and means for discriminating a host that is a group member from a host outside the group based on the list to block communications from the host outside the group.

According to the present invention, each host itself does not need to have a member list etc. Therefore, it becomes possible to implement the closed communications within a group without increasing processing loads on the hosts even if the group members increase in number.

The packet relay apparatus mentioned above further includes a converter for converting a global address and a private address into each other.

With such an arrangement, communications become possible between a private network and a global network and between private networks.

In the packet relay apparatus mentioned above, for example, an arbitrary host is assigned with a virtual private address (referred to also as virtual IP address) with respect to a virtual IP subnet.

With such an arrangement, it becomes possible to group a host group virtually in the IP subnet.

The packet relay apparatus mentioned above further includes means for encrypting communications performed between the packet relay apparatus and a different packet relay apparatus.

With such an arrangement, it becomes possible to prevent information from being leaked on a relay route.

The packet relay apparatus mentioned above further includes means for automating tunnel setting performed between the packet relay apparatus and a different packet relay apparatus via a predetermined tunnel protocol.

With such an arrangement, it becomes possible to automate the tunnel setting.

The packet relay apparatus mentioned above further includes means for automating group setting performed with a different packet relay apparatus based on a virtual group setting protocol.

With such an arrangement, it becomes possible to automate the group setting.

The packet relay apparatus mentioned above further includes means for automating setting of members belonging to the group performed with a different packet relay apparatus based on a virtual group setting protocol.

With such an arrangement, it becomes possible to automate the member setting.

The packet relay apparatus mentioned above further includes means for checking whether the packet relay apparatus and another packet relay apparatus are reliable to each other or not by authenticating each other.

With such an arrangement, it becomes possible to perform communications only with reliable counterparts.

In the packet relay apparatus mentioned above, the packet relay apparatus and the host are directly connected to each other without connection to another host.

With such an arrangement, it becomes possible to prevent information from being leaked on the relay route between the packet relay apparatus and the host.

In the packet relay apparatus mentioned above, a virtual IP host is built for causing a non-IP terminal to appear to another host such that the non-IP terminal exists virtually as an IP host in the group.

With such an arrangement, it becomes possible to perform communications even with the non-IP terminal.

In the packet relay apparatus mentioned above, layer-2 addresses (L2 address) of the hosts are associated with machines as identifiers (ID) unique to the hosts on a one-to-one basis.

With such an arrangement, even if the host is moved or if suspension cause a change in IP address via DHCP, the host can be recognized by group members.

In the packet relay apparatus mentioned above, virtual layer-2 addresses are used to respond to ARP (Address Resolution Protocol) in place of the hosts belonging to the group, thereby implementing intra-group communications on a local subnet level.

In the packet relay apparatus mentioned above, name resolution is not performed in a gateway, names are collectively resolved in a DNS server, and conversion between actual addresses and virtual private addresses is described in patterns.

With such an arrangement, it becomes possible to reduce the resources required for the address conversion and the processing time.

The present invention can also be specified as follows.

An IP packet relay apparatus providedbetween networks , through which an IP packet relating to a host belonging to a particular group, includes: a list in which an IP address possessed by a host is associated with a group identifier for identifying a group to which the host belongs; judgment means for judging whether an IP packet that has received from one network and is destined to a host connected to another network is an IP packet relating to the same group or not with reference to the list; and forwarding means for relaying an IP packet judged to be the IP packet relating to the same group to the another network.

With such an arrangement, each host itself does not need to have a member list etc. Therefore, it becomes possible to implement the closed communications within a group without increasing processing loads on the hosts even if the group members increase in number.

In the IP packet relay apparatus mentioned above, the judgment means refers to the list, and in a case where groups corresponding to a transmission origin address and a destination address of the IP packet that has reached from the one network are the same, judges that the IP packet is the IP packet relating to the same group. This indicates an example of a judgment criterion according to the judgment means.

The present invention is characterized in that, in order to group arbitrary hosts having the same object securely and to be scalable without adding any change to the communication hosts, the gateway device manages the group, and the actual IP addresses and the virtual IP addresses are converted into each other to virtually build an IP sub-network, whereby the group can be identified by the IP addresses.

The basic idea of the present invention is to provide the gateway device with the function necessary for grouping. That is, to satisfy the above-mentioned requested conditions, a new gateway (= router) is provided for connecting hosts belonging to the group. This gateway device has a function of connecting networks that are physically separated similarly to the existing router, switch device, etc., and is obtained by adding the new function necessary for the grouping to those devices. Accordingly, all the functions necessary for a host according to the conventional art are implemented to the gateway , whereby the communications based on the grouping are realized only by a simple TCP/IP protocol stack having a low functionality.

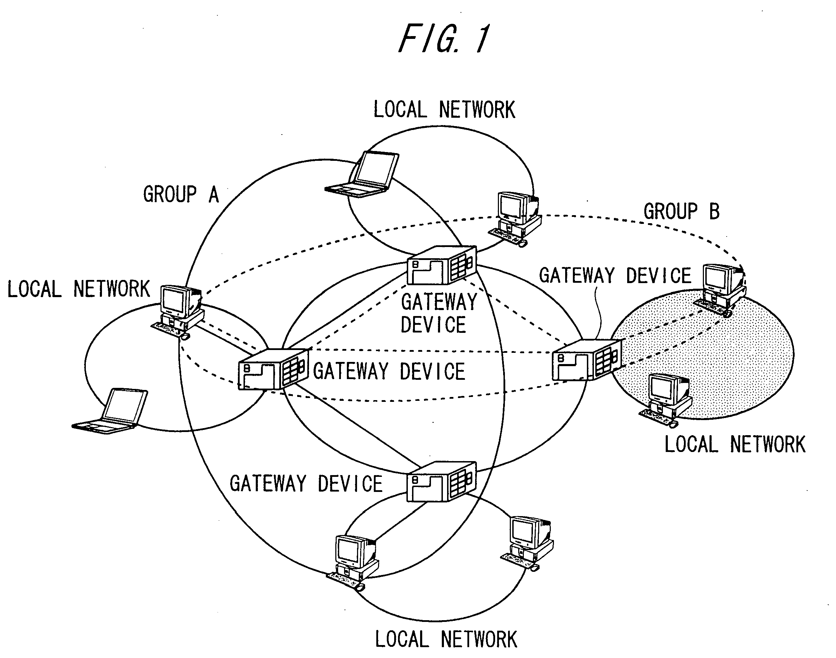

The functions of the host are normally reduced, whereby the communications based on the grouping are realized via gateway devices different between the hosts, that is, two or more gateway devices (see FIG. 1).

To brief on the means for solving the problems, the basic idea of the present invention is to newly provide the following three means to the gateway.
1. Access restriction function: the gateway device has a list of addresses of group members in order to block access to the host that is a group member from hosts other than the group members, and identifies the group members based on this list to block or restrict the communications from the hosts other than the members.
2. Function of allowing a host to identify a member: further, the gateway device has a function of returning character strings including a group name of the communication destination by using a DNS in order to allow each group member to refer to the group by using a standard TCP/IP protocol.
3. Group member management function: further, the gateway device has means for authenticating a host that intends to newly participate in the group and registering the host in the group member list, and a function of deleting a given host that intends to depart from the group members. In addition, to simplify the management, the gateway device can optionally have means for synchronizing groups and their member information between gateways.

### BRIEF DESCRIPTION OF THE DRAWINGS

FIG. 1 is a diagram for explaining a schematic configuration of a network system according to a first embodiment.
FIG. 2 is a diagram for explaining a schematic configuration of the network system according to the first embodiment.
FIG. 3 is a functional block diagram of a gateway according to the first embodiment.
FIG. 4 is a flowchart for explaining an operation of the gateway .
FIG. 5 is a flowchart for explaining an operation of the gateway .
FIG. 6 is a sequence chart for explaining an operation of the gateway.
FIG. 7 is a diagram for mainly explaining a schematic configuration of a network system according to a second embodiment.
FIG. 8 is a functional block diagram of a gateway according to the second embodiment.
FIG. 9 is a flowchart for explaining an operation of the gateway.

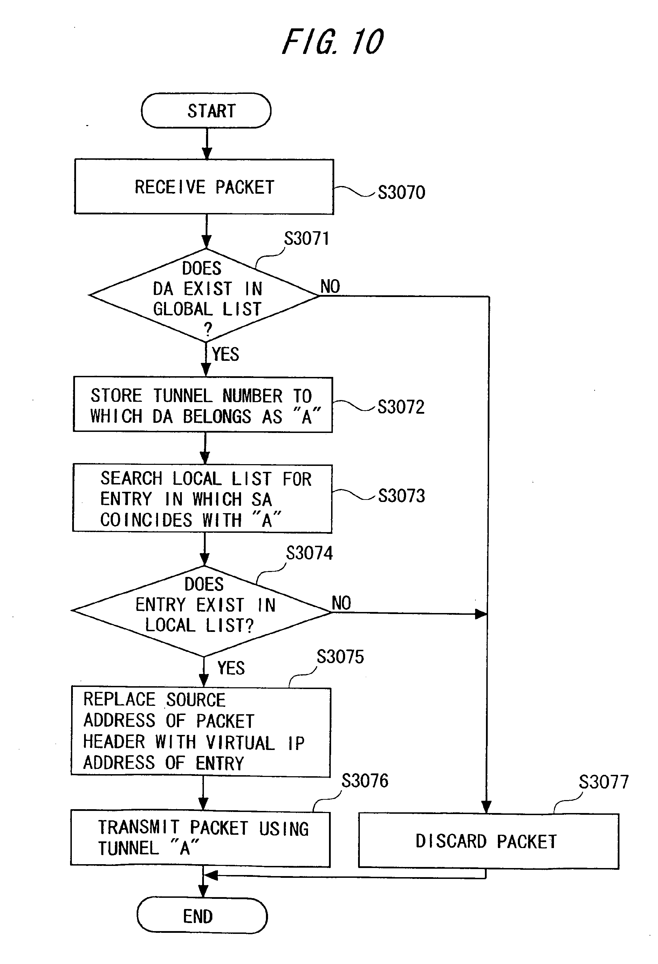

FIG. 10 is a flowchart for explaining an operation of the gateway.
FIG. 11 is a sequence chart of an inter-gateway setting protocol.
FIG. 12 is an example of a local list held by a gateway GW-B.
FIG. 13 is an example of a global list held by the gateway GW-B.
FIG. 14 is an example of a local list including an individual identifier.
FIG. 15 is an example of the global list held by the gateway BGW-B.
FIG. 16 is an example of the global list.
FIG. 17 is a sequence chart for explaining an operation of a gateway according to a seventh embodiment.

### BEST MODE FOR CARRYING OUT THE INVENTION

Hereinafter, the drawings are referenced to describe a network system including a gateway (referred to also as "GW" or "gateway device") according to a first embodiment of the present invention.

### (First embodiment)

### (Outline of a network system)

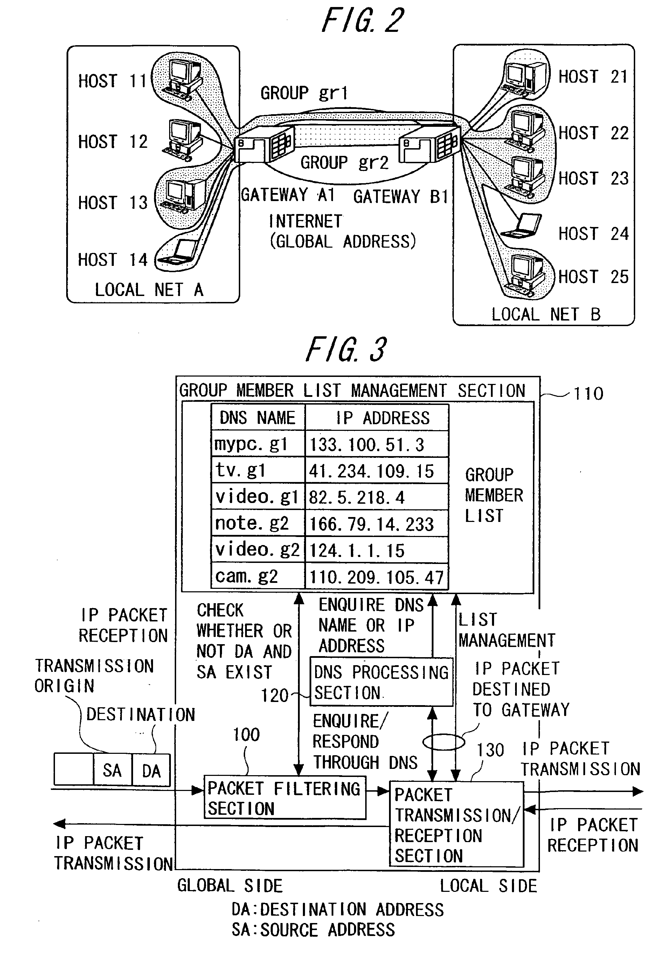

FIGS. 1 and 2 are diagrams for explaining a schematic configuration of the network system according to this embodiment.

As shown in FIG. 2, the network system of the embodiment is composed of a local network A (hereinafter, referred to as "local net A"), a local network B (hereinafter, referred to as "local net B"), and the Internet. The local net A and local net B are each connected with hosts to be grouped (herein, hosts 11 to 14 and hosts 21 to 25, respectively). Note that the number of the hosts to be grouped can be appropriately set.

The hosts are each a terminal such as a household electrical appliance having a function of performing communications using IP packets. The hosts each have a global IP address to perform the communications by IP packets. Herein, IP addresses based on IPv4 are used. The local net A is connected to the Internet via a gateway A1. Similarly, the local net B is connected to the Internet via a gateway B1.

An IP packet made to flow from the local net B toward the local net A via the Internet (that is, an IP packet whose a source IP address is an IP address of a host connected to the local net B and whose a destination IP address is an IP address of a host connected to the local net A) reaches the gateway A1. In contrast, an IP packet made to flow from the local net A toward the local net B via the Internet (that is, an IP packet whose a source IP address is an IP address of a host connected to the local net A and whose a destination IP address is an IP address of a host connected to the local net B) reaches the gateway B1.

In this embodiment, the gateways A1 and B1 each execute a filtering processing described later or the like with respect to the IP packet that has reached. It is accordingly possible to implement closed communications within a group. This will be described below in detail.

### (Schematic configuration of a gateway)

Next, description will be made of a schematic configuration of the gateway with reference to the drawings. FIG. 3 is a functional block diagram of the gateway.

The gateway A1 (the same applies to the gateway B1) is a packet relay apparatus that is providedbetween a local network (for example, the local net A or B) and a global network (for example, the Internet) in order to implement closed communications within a group by grouping arbitrarily selected hosts on an IP network composed of IP hosts each having a global address.

To be specific, as shown in FIG. 3, the gateway A1 includes a packet filtering section 100, a groupmember listmanagement section 110, a DNS processing section 120, and a packet transmission/reception section 130.

The packet filtering section 100 receives the IP packet made to flow from the local net B toward the local net A via the Internet (that is, the IP packet whose a source IP address is the IP address of a host connected to the local net B and whose a destination IP address is the IP address of a host connected to the local net A) . The packet filtering section 100 enquires of the group member list management section 110 whether the received IP packet is one relating to the same group or not (herein, whether groups corresponding to the source IP address (SA) and the destination IP address (DA) of the received IP packet are the same or not).

Upon reception of an enquiry from the packet filtering section 100, the group member list management section 110 refers to a group member list managed by itself to judge whether the groups corresponding to the source IP address and the destination IP address are the same or not. Correspondences among the hosts (hosts 11 to 14 and hosts 21 to 25), the IP addresses of the hosts, and the domain names of the hosts are described in the group member list. Note that for convenience of description, the number of the correspondences described in the group member list of FIG. 3 is smaller than the number of hosts shown in FIG. 2.

The domain name is formed by coupling a host name (such as "mypc" or "tv") of a host and group identification information (such as "gr1" or "gr2") for identifying a group to which the host belongs, with "." therebetween. Accordingly, the group member list management section 110 can refer to the group member list to recognize the group (group identification information) corresponding to the source IP address and the destination IP address. By comparing the recognized groups (group identification information), it can be judged whether the two groups are the same or not. The judgment result is returned to the packet filtering section 100.

Upon reception of the judgment result indicating that the groups corresponding to the source IP address and the destination IP address are the same, the packet filtering section 100 forwards the received IP packet to the local net A (destination). On the other hand, upon reception of the judgment result indicating that the groups corresponding to the source IP address and the destination IP address are not the same, the packet filtering section 100, for example, discards the received IP packet, rather than forwards the packet to the local net A.

### (Group member list)

The group member list can be created by various methods. For example, it is possible to newly create virtual groups gr1 and gr2 on the network, then register IP addresses and names (herein, domain names (DNS names) of hosts belonging to the respective groups, and finally obtain an address list in which the groups and the members are stored. FIG. 3 shows the group member list thus obtained.

An administrator of the network performs the series of operations by establishing connection with a management terminal and manually performing setting to the gateway A1 through a command line interface. Alternatively, the setting may be performed via a remote setting protocol (Telnet, HTTP, or the like) used for management setting. For example, in the case of using the HTTP, there may exist a predetermined group having a Web interface for creating groups and a function of registering/managing members of the groups, in the gateway A1 , and there may be such access restriction that a given host is allowed to access a Web page for registration upon authentication through an ID and a password inputted through a registration screen of the gateway. On the page for registration, a group can be registered by inputting a group name, and by registering a host IP address in association with an existing group name, the corresponding host can be defined as a member belonging to the group. Those registration steps, which depend upon the design of a user interface, merely constitute an exemplary method, and may be replaced by another registration method having a function of registering a group and its member hosts.

As a result, it is possible to create a group member list in which the IP addresses and DNS names of hosts and the group names of groups to which the hosts belong are stored.

### (Domain name registration)

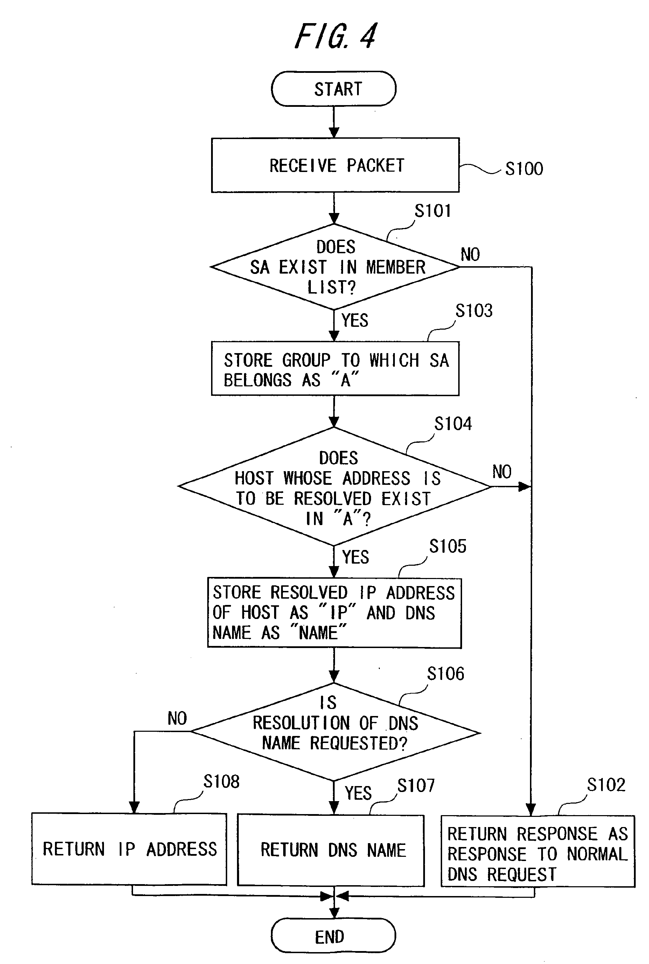

Next, description will be made of an operation of the gateway serving as a DNS with reference to the drawings. FIG. 4 is a flowchart for explaining the operation of the gateway.

As described above, it is possible to define a name unique to each IP address, and combine the name with the above group name to define an appropriate domain name. For example, if the host 12 is registered as having the name "mypc" and if the group name to which the host 12 belongs is "g1", the gateway assigns the DNS name "mypc.g1" to the IP address "133.100.51.3" of the host 12.

Upon reception of an IP packet including a resolution request for an IP address corresponding to the DNS name "mypc.g1" sent from a host that has already been registered within the group (S100), the gateway A1 enquires of the group member list management section 110 whether or not the source IP address (SA) of the received IP packet exists in the group member list (S101). If the result indicates that the source IP address (SA) does not exist in the group member list (S101: No), the gateway A1 returns a response as a response to a normal DNS request. (S102). On the other hand, if the source IP address (SA) exists in the group member list (S101 :
Yes), the gateway A1 stores the group, to which the source IP address (SA) corresponds (belongs), as "A" (S103) . The gateway A1 judges whether or not the host attempting the resolution exists in the group "A" previously stored (S104). If the result indicates that the host does not exist in the group "A" (S104: No), the gateway A1 returns a response as a response to a normal DNS request (S102). On the other hand, if the host exists in the group "A" (S104: Yes), the gateway A1 refers to the group member list to obtain the IP address "133.100.51.3" corresponding to the DNS name "mypc.g1". The gateway A1 stores the resolved IP address "133.100.51.3" as "IP" and the DNS name "mypc.g1" as "Name" (S105).

The gateway A1 then judges whether or not the request from the host is the resolution request for a DNS name (S106). If the result indicates that the request from the host is the resolution request for a DNS name (S106: Yes), the gateway A1 returns a DNS name to the request origin host (S107). On the other hand, if the request from the host is not the resolution request for a DNS name (S106: No), the gateway A1 returns an IP address to the request origin host (S108). Herein, since the request from the host is a resolution request for an IP address (S100, S106: No), the gateway A1 returns the IP address "133.100.51.3" corresponding to the DNS name "mypc.g1" to the request origin host for address resolution (S108) . Note that if the IP packet including the resolution request for a DNS name corresponding to the IP address "133 . 100 . 51 . 3" is received from the host in step S100, the gateway A1 returns the DNS name "mypc.g1" corresponding to the IP address to the request origin host for DNS name resolution (S107).

Note that there is generally a limitation to effect the processing for DNS response based on the group member list only on a local network side. For example, there is a possible limitation such that the source IP address for a DNS request exist in the member list previously created and only requests with respect to hosts belonging to the same group be accepted.

As a result, it is possible to define a group member list in which a DNS name is stored for each IP address and return a response to a request for the DNS.

### (Access restriction)

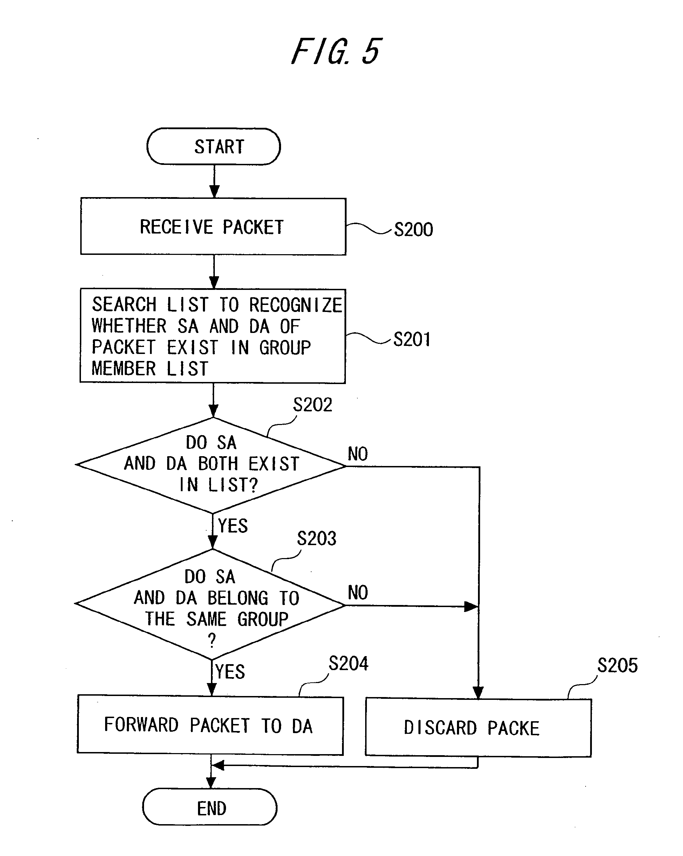

Next, description will be made of an operation for implementing closed communications within the group using the gateway having the above configuration with reference to FIG. 5. FIG. 5 is a flowchart for explaining the operation of the gateway.

First, description will be made by taking an example of communications between the host 11 and the host 22 that belong to the same group gr1. Note that description in the group member list of the gateway A1 (the same applies to the gateway B1) includes correspondences between IP addresses of the host 11 and the host 22 and the domain names (each composed of a host name and a group identifier) of the respective hosts.

It is first assumed that the host 22 transmits to the host 11 an IP packet (that is, the IP packet whose source IP address is the IP address of the host 22 and whose destination IP address is the IP address of the host 11). The IP packet reaches the gateway A1 via the Internet. The gateway A1 receives the packet that has reached through the packet filtering section 100 (S200) . The packet filtering section 100 enquires of the group member list management section 110 whether the received IP packet is one relating to the same group or not (herein, whether groups corresponding to the source IP address (SA) and the destination IP address (DA) of the received IP packet are the same or not) (S201).

Upon reception of an enquiry from the packet filtering section 100, the group member list management section 110 refers to a group member list managed by itself to judge whether the groups corresponding to the source IP address and the destination IP address are the same or not (S202 and S203) . Correspondences among the hosts (hosts 11 to 14 and hosts 21 to 25), the IP addresses of the hosts, and the domain names of the hosts are described in the group member list (see FIG. 3). Note that for convenience of description, the number of the correspondences described in the group member list of FIG. 3 is smaller than the number of hosts shown in FIG. 2. The domain name is formed by coupling a host name (such as "mypc" or "tv") and group identification information (such as gr1 or gr2) for identifying a group to which the host belongs, with "." therebetween.

Accordingly, the group member list management section 110 can refer to the group member list to learn the group (herein, gr1 for all cases) corresponding to the source IP address and the destination IP address (S202: Yes). By comparing the learned groups (herein, each being gr1), it can be judged whether the two groups are the same or not (S203: Yes). The judgment result is returned to the packet filtering section 100. Note that if the judgment is No in steps S202 or S203, the packet is discarded (S205).

Herein, the packet filtering section 100 receives the judgment result indicating that the groups corresponding to the source IP address and the destination IP address are the same. Upon reception of the judgment result, the packet filtering section 100 forwards the received IP packet to the local net A (destination) (S204). This is the same processing as a processing called filtering in general.

Next, description will be made by taking an example of communications between the host 11 (belonging to gr1) and the host 21 (belonging to gr2) that belong to different groups.

It is first assumed that the host 21 transmits to the host 11 an IP packet (that is, the IP packet whose source IP address is the IP address of the host 21 and whose destination IP address is the IP address of the host 11). The IP packet reaches the gateway A1 via the Internet. The gateway A1 receives the packet that has reached through the packet filtering section 100 (S200). The packet filtering section 100 enquires of the group member list management section 110 whether the received IP packet is one relating to the same group or not (herein, whether groups corresponding to the source IP address (SA) and the destination IP address (DA) of the received packet are the same or not) (S201).

Upon reception of an enquiry from the packet filtering section 100, the group member list management section 110 refers to a group member list managed by itself to judge whether the groups corresponding to the source IP address and the destination IP address are the same or not (S202 and S203) . Correspondences between the IP addresses of the hosts and the domain names of the hosts are described for the respective hosts (hosts 11 to 14 and hosts 21 to 25) in the group member list (see FIG. 3). Note that for convenience of description, the number of the correspondences described in the group member list of FIG. 3 is smaller than the number of hosts shown in FIG. 2. The domain name is formed by coupling a host name (such as "mypc" or "tv") and group identification information (such as gr1 or gr2) for identifying a group to which the host belongs, with "." therebetween.

Accordingly, the group member list management section 110 can refer to the group member list to learn the group (herein, gr1, gr2 for all cases) corresponding to the source IP address and the destination IP address (S202 : Yes). By comparing the learned groups (herein, being gr1, gr2), it can be judged whether the two groups are the same or not (S203: Yes) . The judgment result is returned to the packet filtering section 100.

Herein, the packet filtering section 100 receives the judgment result indicating that the groups corresponding to the source IP address and the destination IP address are the same. Upon reception of the judgment result, the packet filtering section 100 discards the received IP packet, rather than forwards the packet to the local net A (S205).

As described above, the gateway device of this embodiment provides a function of restricting access from hosts other than group members. That is, the gateway device of this embodiment refers to the group member list to judge whether the IP packet that has reached from the transmission origin host is an IP packet relating to the same group or not, and then forwards the packet judged to be the IP packet relating to the same group. On the other hand, the packet judged not to be the IP packet relating to the same group is discarded instead of being forwarded. Accordingly, the gateway device of this embodiment can implement the closed communications within a group.

Note that the operation relating to the case where a packet reaches from a host other than a transmission origin stored in the group member list depends upon the policy of a network administrator. For example, such a packet may be discarded. Alternatively, such a packet having a specific IP address as a destination address may be forwarded to a host instead of being discarded. Description relating to those operations may be included separately in the group member list.

In the above embodiment, the gateway device A1 is described as performing the filtering processing on the IP packet made to flow from an external network toward the local network A. However, the present invention is not limited thereto. For example, the gateway device A1 may be adapted to perform the filtering processing also on an IP packet made to flow from the local network A toward the external network. This arrangement increases the loads on the gateway device A1 due to the filtering processing or the like. However, it becomes possible to implement the closed communications within the group by using only the gateway device A1 without introducing the gateway device B1.

### (Specific example of intra-group communications)

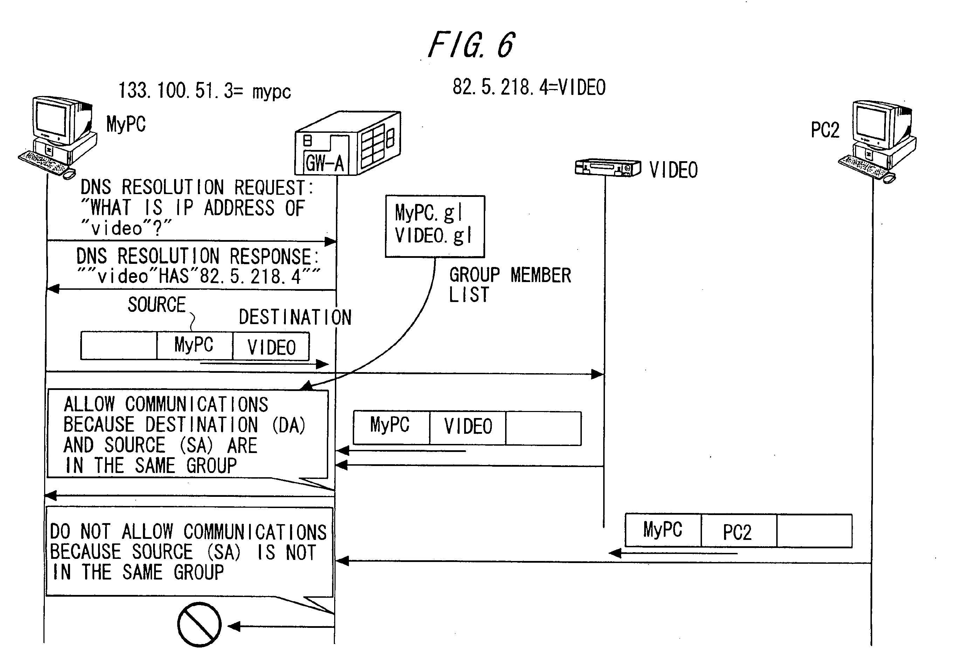

Description will be made of a series of processings for implementing an intra-group communications shown in FIGS. 4 and 5 with reference to a sequence chart. FIG. 6 shows the sequence chart for explaining an operation of the gateway.

It is first assumed that "mypc" intending to communicate with "video", transmits a DNS resolution request to a gateway GW-A and obtains an IP address "82.5.218.4" of "video". Then, the IP address is used to transmit an IP packet from "mypc" to "video", starting communications. In the case where a packet for responding to the IP address is transmitted from "video" to "mypc", upon reception of the packet, the gateway GW-A checks the group member list before forwarding the packet to "mypc" to confirm that "mypc" and "video" are in the same group, followed by the forwarding of the packet to "mypc".

If, for example, a communication packet destined to "mypc" is transmitted from a host called "PC2", which is not registered in the group member list, to reach the gateway GW-A, the gateway GW-A checks the source address (SA) of the packet to find that "PC2" does not exist in the list, and accordingly discards the packet. This makes it possible to improve security by blocking communications with a host not belonging to a given group.

### (Specific example of returning information on all hosts belonging to a group)

### (List of IP addresses of group members)

The gateway not only returns the correspondence between a registered host names and its IP address, but also can return a group name and all members belonging to the group. This can be realized by processing in which, upon reception of an address resolution request in terms of the group name, for example, "g1", the gateway returns a DNS response message including all host addresses having the group name "g1". Such a response message is admitted under the existing DNS specifications, so it is possible to receive a plurality of IP addresses for a single name without particularly expanding a DNS function.

Application of the function allows a host, for example, to obtain a list of all members belonging to the group "g1" to which the host itself belongs, which can realize a function of, for example, transmitting a message or a file to all the members as a function equivalent to the existing mailing list function.

### (Second embodiment)

Next, the drawings are referenced to describe a network system including a gateway (referred to also as "GW" or "gateway device") according to a second embodiment of the present invention.

In the first embodiment, the IP address of each host needs to be a global address, which does not allow the use in an environment in which private IP addresses are often used in actuality. In addition, there is no other measure than to check a group name through a DNS as to whether a given host is a member of the group.

For example, if a given host belongs to two groups consisting of a group that provides a right to read a file and a group that allows a read/write right for full control, upon access from an unknown host, the given host must recognize a group through a DNS to find which right the unknown host has. In order to solve such a problem, the gateway device is additionally provided with the following new functions including:
a NAT (Network Address Translation) function of converting a virtual IP address and an actual IP address into each other during communications by 1. uniquely assigning each group with an arbitrary virtual private network address, and 2. assigning each group member with the virtual IP address belonging to the assigned network address.

### (Outline of a network system)

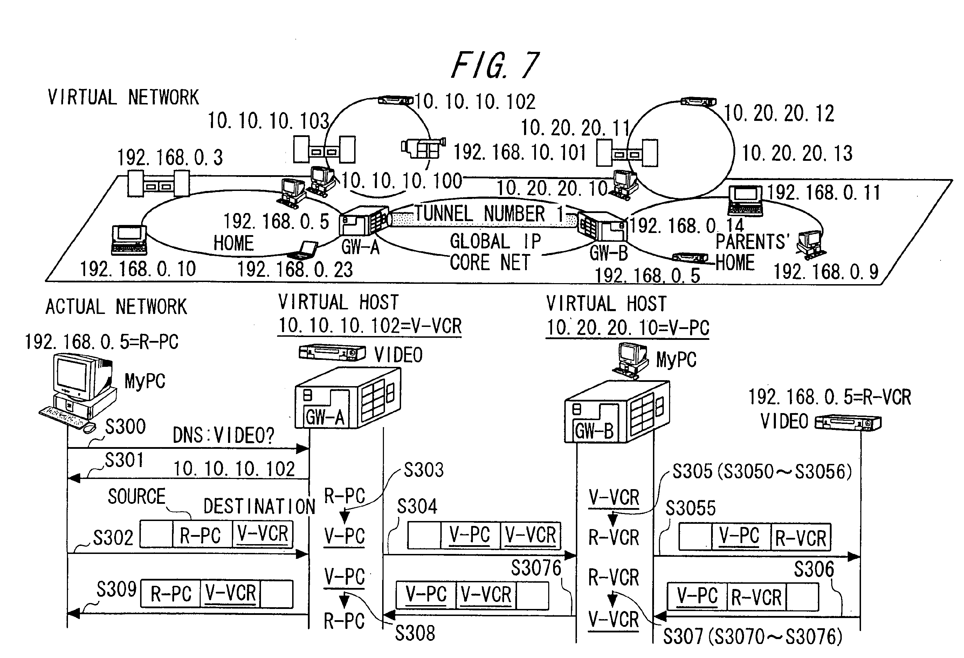

FIG. 7 explains a schematic configuration of a network system according to this embodiment.

As shown in FIG. 7, the network system according to this embodiment is composed of a local network (hereinafter, referred to as "home net") installed in a home, another local network (hereinafter, referred to as "parents' net") installed in the parents' home, and the Internet. The home net and parents' net are connected to hosts to be grouped. For example, the home net is connected to "mypc" and the like, while the parents' net is connected to "video" and the like. In this embodiment, four hosts (including "mypc" and "video") are extracted from the hosts connected to the home net and the host connected to the parents' net, and are recognized as a single group. Note that the number of hosts to be grouped may be appropriately set.

The hosts each have a function of performing communications via IP packets. The hosts each have a local IP address for the communications via IP packets. Herein, IP addresses based on IPv4 are used. The home net is connected to the Internet via the gateway GW-A. Similarly, the parents' net is connected to the Internet via a gateway GW-B.

However, in this embodiment, unlike the first embodiment, since the hosts each have a local IP address, an address space of the home net overlaps an address space of the parents' net (see FIG. 7). For example, the host "mypc" connected to the home net and the host "video" connected to the parents' net have the same local IP address 192.168.0.5, indicating the overlap between address spaces. In such an environment, communications are not allowed between the home net and the parents' net. In addition, there is no way to determine whether a given host is a group member or not other than to check a group name by use of a DNS. For example, if a given host belongs to two groups consisting of a group that provides a right to read a file and a group that allows full control of read/write, upon access from an unknown host, the given host must recognize a group through a DNS to find which right the unknown host has.

In this embodiment, the gateways GW-A and GW-B have a NAT conversion function. Therefore, a host existing on a network other than the local network can be apparently recognized by a local host as a host having another different address.

For example, consideration will be made to the case as shown in FIG. 7 where the host "mypc" in the home has an actual address "192 . 168 . 0 . 5" , the host "video" in the parents' home has the same actual address "192.168.0.5", and "mypc" and "video" performs communications with each other via the gateways GW-A and GW-B.

The host "mypc" in the home previously registers the host "video" in the gateway GW-A as a host that virtually has a virtual IP address "10.10.10.102", while "video" in the parents' home previously registers the host "video" in the gateway GW-B as a host that virtually has a virtual IP address "10.20.20.10" in a similar manner.

First, "mypc" enquires the IP address of the host having the DNS name "video" from the gateway GW-A, and the gateway GW-A returns the address "10 . 10 . 10 . 102 (= V-VCR) " serving as a virtual IP address. The host "mypc" transmits an IP packet to the virtual IP address "V-VCR". Herein, the packet passes through the gateway GW-A without exception. Thus, the gateway GW-A learns that the destination address "V-VCR" is a virtual IP address, the packet is actually destined to a host "video" subordinate to the gateway GW-B, and "mypc" is recognized by the host subordinate to the gateway GW-B as having the address "10.20.20.10 (= V-PC)".

Then, the gateway GW-A converts the source address "R-PC (192.168.0.5)" into the virtual IP address "V-PC (10.20.20.10)" for the gateway GW-B, and transmits the packet to the gateway GW-B through an IP tunnel.

Upon reception of the packet, the gateway GW-B learns that a virtual IP address is used for the packet received from the gateway GW-A. Accordingly, the gateway GW-B converts the destination address "V-VCR" into the actual address "192.168.0.5", and transmits the packet to "video".

Conversion reverse to the above-mentioned steps is performed from "video" to "mypc"., thereby allowing communications between arbitrary hosts through virtual IP addresses.

Note that the existing NAPT function can be used basically for an address conversion function necessary for the above-mentioned processing. Also, the existing various techniques such as PPPoverSSH and IPSec are used for the IP tunnel communications between gateways. If SH or IPSec is used for the IP tunnel communications, the communications between the gateways GW-A and GW-B are encrypted in terms of a virtual subnet, thereby preventing the contents of the communications from being tapped in a global IP core net section.

Further, an L2 network for a point-to-point connection is used for the connection between the host and the gateway without configuring a broadcast domain via Ethernet, thereby making it possible to block connections from hosts other than group members.

### (Operation requirements)

The requirements for implementing the above-mentioned operation are as follows.
1. Upon packet transmission, the gateway GW-A or GW-B performs routing for selecting a tunnel (counter GW) . The routing allows the counter GW (tunnel) to be determined by use of a destination virtual IP address.
2. A local host has a different virtual IP address for each group to which the local host belongs as well as for each counter GW. The virtual IP address is shared with the counter GW that uses the virtual IP address.
3. A local gateway (GW) manages the conversion between a virtual IP address and an actual IP address that are assigned to a given local host. It is sufficient that the gateway (GW) of a destination network knows only the virtual IP of a transmission origin host, which is because there is no need to know the actual IP address.
4. Accordingly, the local gateway (GW) converts between the virtual IP address and the actual address of the local host. Those requirements make it necessary for a GW to manage/maintain two lists consisting of: a list called a global list, which is used for managing virtual IP addresses of all group members and their DNS names; and a list called a local list, which includes virtual IP addresses of hosts connected to a local network and their corresponding GW numbers that are to be recognized by counter GWs constituting groups.

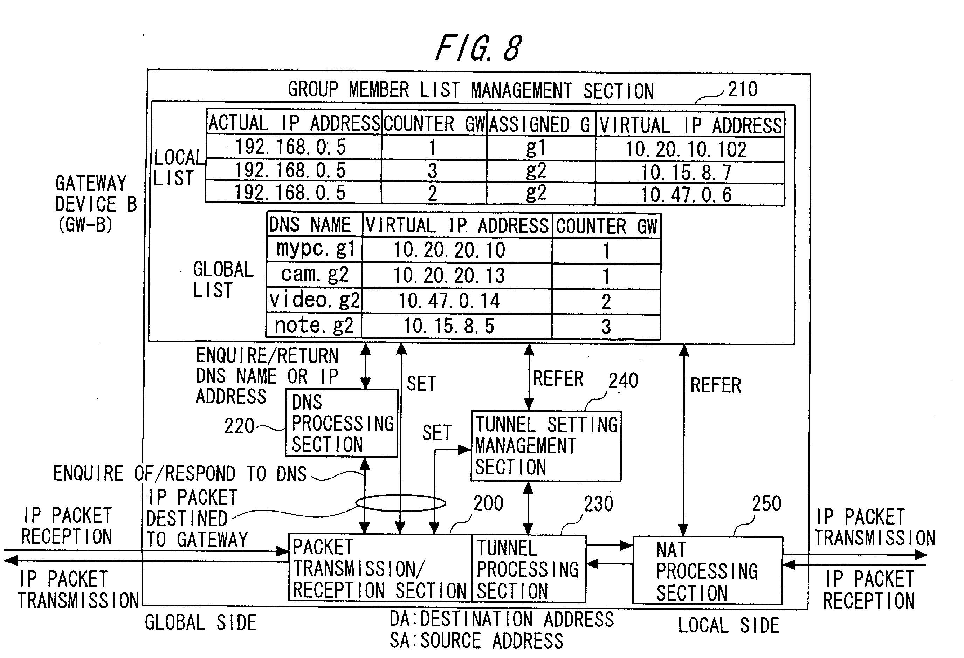

For example, as shown in FIG. 8, the global list stored in the gateway GW-B indicates the virtual IP addresses corresponding to the member hosts "mypc", "cam", "video", and "note" in the two groups "g1" and "g2" to which the local host "video" (address: 192.168.0.5) belongs.

The same list can be used for hosts other than "video" which are connected to the gateway GW-B. In this case, it is necessary to provide means for judging which local host a given entry belongs to. For example, if an identifier relating to an assigned group (column "ASSIGNED G") is stored in the local list, since the DNS name of the global list includes description of a group to which a host belongs, it is possible to recognize group relationships. As a result, it can be judged which local host belongs to the same group as the host stored in the global list.

Note that the same operation can be performed by adopting any other means such as providing the global list to each local host. Similarly, the local list has virtual IP addresses relating to "video" stored therein, and in this case, IP addresses different on a counter GW basis are used as the virtual IP addresses. With the local list, virtual IP addresses of hosts other than "video" may be managed, or only an entry relating to a host may be added to the list.

### (Schematic configuration of a gateway)

Next, description will be made of a schematic configuration of the gateway with reference to the drawings. FIG. 8 is a functional block diagram of the gateway.

As shown in FIG. 8, the gateway GW-B (the same applies to the gateway GW-A) includes a packet transmission/reception section 200, a group member list management section 210, a DNS processing section 220, a tunnel processing section 230, a tunnel setting management section 240, and a NAT processing section 250.

The gateway device GW-B separates a global IP network from a private (local) network. Since a packet exchanged between groups includes an arbitrary IP address, the IP packet cannot be transmitted as it is to the global IP network. Herein, an IP packet is transmitted/received via an IP tunnel (which is a mere example and may be of any type as long as it is a tunnel) provided between the gateways GW-A and GW-B. In this case, both source/destination addresses of the IP packet which form the IP tunnel are the addresses of gateways (GWs) without exception.

Upon reception of the IP packet, the gateway GW-B discards a packet other than the one destined to itself by the packet transmission/reception section 200. Then, the gateway (GW) judges whether the received packet is an IP tunnel packet destined to itself or a control packet destined to itself based on a destination port number. If the judgment result indicates that the port number is an IP port number (or protocol number) for the IP tunnel, the received IP packet is processed by the tunnel processing section 230.

The tunnel processing section 230 terminates the tunnel formed of the received IP packet group. If the IP packet group is encrypted, the tunnel processing section 230 releases the encryption, and then extracts an encapsulated IP packet transmitted through the tunnel. This operation is only an example. The concept is based on a widely-known technique called an IP-IP tunnel and the like. Therefore, various tunnel processing technologies such as PPP and IPSec can be used instead of the above-mentioned IP tunnel..

After that, the destination of the IP packet extracted from the IP tunnel is rewritten by the NAT processing section 250. This is because, as described in conj unction with the above requirements, the correspondence between a destination address and a virtual IP address is basicallyprocessedby the local gateway (GW) that receives the destination host, and therefore the NAT processing section 250 of the local gateway (GW) is thus the only one function that can implement this processing.

The NAT processing section 250 obtains the virtual IP address from the counter GW (= tunnel) of the received IP packet and the destination address of the received packet. The NAT processing section 250 refers to the "local list" stored in the group member list management section .210 with the two values as keys to obtain a destination actual IP address. Then, the NAT processing section 250 transmits the IP packet whose virtual IP address has been rewritten into the actual address finally to the local network side.

In this example, the description has been made such that the NAT processing section 250 converts the destination IP address of the received IP packet into the actual address based on the above-mentioned requirements, but there are other possible means. There exist two pairs of gateways on a transmission side and a reception side along the communication route, so it is sufficient that the NAT processing section 250 of either of the pair of gateways can implement the processing of converting the destination/source addresses of a packet having virtual IP addresses into actual addresses. Accordingly, for example, if the destination address is converted into the actual IP address at the gateway on the transmission side, the NAT processing becomes unnecessary at the gateway on the reception side. However, in this case, the actual IP address of the destination host needs to be learned at the gateway on the transmission side, which increases processing loads. Note that substantially the same function block is used for the processing relating to the address conversion upon packet transmission.

Note that the packet transmission/reception section 200 and the DNS processing section 220 function in the same manner as the packet transmission/reception section 130 and the DNS processing section 120, respectively, which have been described in the first embodiment.

### (Specific operation upon packet reception)

It is assumed that "mypc" having the virtual IP address "10.20.20.10" belonging to the gateway GW-A transmits a packet to "video", that is, the virtual IP address "10.20.10.102", and the gateway GW-B receives the packet.

By searching the global list with the destination address of the receivedpacket as a key (alternatively, recognizing an interface through which the packet has been received), the gateway GW-B learns that the packet has been received through the tunnel 1, that is, the counter GW number 1. In addition, the destination address is found to be "10.20.10.102". By searching the "local list" with the two as keys, the gateway GW-B learns that the actual IP address of the destination is "192.168.0.5". Based on this information, the gateway GW-B converts the destination address by the NAT conversion section and transmits the received packet finally to the local network, thereby completing its processing.

### (Specific operation upon packet transmission)

Consideration will be made to the case where the host "video" belonging to the group "g1" uses the gateway GW-B to perform communications with the host "mypc" subordinate to the gateway GW-A via the virtual IP network.

First, as in normal IP communications, the DNS is used to obtain the IP address from the DNS name. Herein, it is assumed that the local host previously registers the gateway GW-B as the DNS server, and the gateway GW-B is provided with address resolution means (DNS server).

The gateway GW-B receives a DNS request destined to a gateway as the packet destined to itself through the packet transmission/reception section. The packet transmission/reception section forwards the received packet to the DNS processing section. The DNS processing section refers to the global list of the group member list, and obtains, for example, an IP address "10.20.20.1" if communications with the host "mypc" of the group "g1" are desired. The host "video" obtains the address as a response from the DNS. Then, data communications actuallystarts between "video" and "mypc". To be specific, "video" transmits the communication packet to "mypc".

Upon reception of the IP packet from the local side, the gateway GW-B refers to the "global list" stored in the group member list management section 210 to obtain a tunnel number used when the packet is transmitted with the destination virtual IP address as a key. Herein, the transmission origin host "video" having the IP address "192.168.0.5" has transmitted the packet to the host "mypc" having the IP address "10.20.20.10", so the tunnel number can be found to be "1" from the destination IP address (= virtual IP address) . In the case where a given host on a local network is assigned with a virtual IP address different on a virtual network basis, the tunnel number is used for determining which virtual IP address is used. Herein, the tunnel number is used. However, in principle, any number can be used as long as it is possible to find a gateway (GW) to which the destination host corresponding to the virtual IP address belongs, and upon reception of the packet, the gateway (GW) can recognize the correspondence between the virtual IP address and the actual IP address of the transmission origin. For example, the global address of a gateway (GW) or an arbitrary ID for local management may be used.

The "virtual IP address" is obtained by referring to the local list with the "tunnel number" and the "actual IP address" of the transmission origin that are obtained herein as keys, and the source address of the packet is converted into the virtual IP address. Then, a notification is issued to the tunnel processing section 230 to instruct that the packet that has undergone the conversion be transmitted through a tunnel that coincides with the tunnel number.

In this example, the tunnel processing section 230 uses a preset IP-IP tunnel based on the tunnel number. Note that with this technique, an arbitrary existing technology can be used for tunnel means between the gateways (GWs) . Instead of the IP-IP tunnel, MPLS or tunnel means at an L2 level using an Ether frame can be used. Even in this case, the tunnel number can be used as the identifier of the tunnel.

The above means allows the IP communications using virtual IP addresses from "video" to "mypc" , and realizes the grouping using the virtual IP addresses.

### (Function of registering various information in a gateway)

In the gateway GW-B, it is necessary to create the global list and the local list. The setting and creation thereof can be performed on the group member list management section 210 from a remote host by using, for example, a command line interface via telnet, a Web interface via HTTP, or the like.

The IP-IP tunnel or the L2-level tunnel that provides the equivalent function can also perform setting on the tunnel setting management section from remote by similarly using telnet or HTTP.

Next, further-detailed description will be made of the communications between the gateway GW-A and the gateway B with reference to the drawings.

Hereinafter, the description will be made by taking an example the case where the host "mypc" (the actual IP address"192.168.0.5 (= R-PC)" and the virtual IP address "10.20.20.10") connected to the home net and the host "video" (the actual IP address"192. 168. 0.5 (= R-VCR)" and the virtual IP address "10.10.10.102") connected to the parents' net perform communications via the gateways GW-A and GW-B.

Note that the global list held by the gateway GW-B, includes description of the correspondence between "mypc" (domain name: mypc.g1) and its virtual IP address "10.20.20.10 (= V-PC)" (see FIG. 8). Similarly, the global list held by the gateway GW-A includes description of the correspondence between "video" (domain name: omitted) and its virtual IP address "10. 10.10. 102 (= V-VCR) " . Since each gateway holds such a global list, for example, the host "video" connected to the parents' net appears to be a host that virtually has the address V-VCR from the host "mypc" connected to the home net. Similarly, the host "mypc" connected to the home net appears to be a host that virtually has the address V-PC from the host "video" connected to the parents' net.

### (Address resolution by gateway GW-A)

As shown in FIG. 7, the host "mypc" enquires the IP address of the host having the DNS name "video" from the gateway GW-A (S300) . The gateway GW-A receives the request through the DNS processing section 220. The DNS processing section 220 enquires the IP address corresponding to the domain name "video" from the group member list management section 210.

The global list managed by the group member list management section 210 includes description of the correspondences among the domain name, virtual IP address, and counter GW (tunnel number) of each host. The domain name is formed by coupling a host name (such as "mypc" or "video") and group identification information (gr1 or gr2) for identifying a group to which the host belongs, with "." therebetween.

Accordingly, the group member list management section 210 can refer to the group member list to learn the virtual IP address "V-VCR" corresponding to the domain name "video" enquired by the DNS processing section 220. The learned virtual IP address "V-VCR" is returned to the host "mypc" of the resolution request origin (S301) . The host "mypc" receives the virtual IP address "V-VCR" from the gateway GW-A.

### (Transmission processing by the host "mypc")

The host "mypc" creates and transmits an IP packet for the host "video" whose source IP address is the actual IP address "192.168.0.5 (= R-PC)" of the host "mypc" and whose destination IP address is the virtual IP address "V-VCR" that has just been resolved (S302).

### (Address conversion processing and forwarding processing by the gateway GW-A)

The IP packet from the host "mypc" passes through the gateway GW-A without exception. The gateway GW-A receives the IP packet through the NAT processing section. The NAT processing section enquires the tunnel number corresponding to the destination IP address (the virtual IP address "V-VCR" of the host "video" which has just been resolved) of the received IP packet from the group member list management section 210. The global list managed by the group member list management section 210 includes description of the correspondences among the domain name, virtual IP address, and counter GW (tunnel number) of each host.

Accordingly, the group member list management section 210 can refer to the global list to learn the counter GW (tunnel number) corresponding to the destination IP address (the virtual IP address "V-VCR" of the host "video" which has just been resolved).

Also, the local list managed by the group member list management section 210 includes description of the correspondences among the actual IP address "R-VCR" , counter GW, and virtual IP address "V-VCR" of the host "video".

Accordingly, the group member list management section 210 can refer to the local list to learn the virtual IP address "V-PC" corresponding to the just-found counter GW (tunnel number) and the source IP address (actual IP address "R-PC" of "mypc") of the received IP packet. The just-found virtual IP address "V-PC" is returned to the NAT processing section 250.

Upon reception of the virtual IP address "V-PC", the NAT processing section 250 converts the source IP address (actual IP address "R-PC" of "mypc") of the received IP packet into the found virtual IP address "V-PC" (S303).

Then, the NAT processing section 250 notifies the tunnel processing section 230 to transmit the IP packet that has undergone the conversion through a tunnel that coincides with the just-found counter GW (tunnel number). Upon reception of the notification from the NAT processing section 250, the tunnel processing section 230 transmits the IP packet that has undergone the conversion through the tunnel (S304).

As described above, the host "mypc" transmits the IP packet for the host "video" , and the gateway GW-Aperforms address conversion on the IP packet for the host "video" and relays the IP-packet that has undergone the conversion.

### (Address conversion processing and forwarding processing by the gateway GW-B)

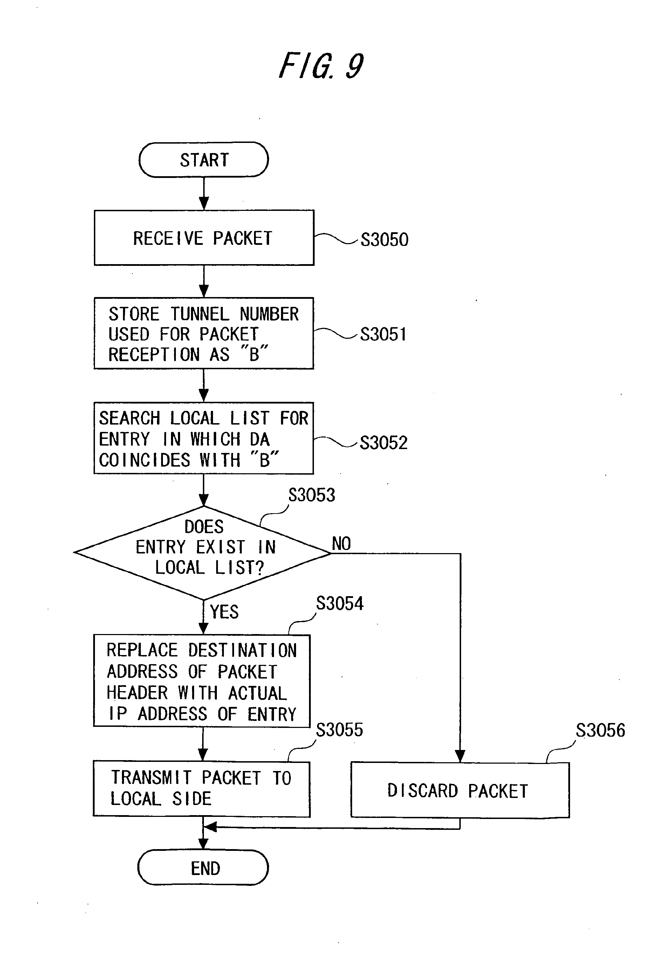

Next, further-detailed description will be made of the address conversion processing by the gateway GW-B with reference to the drawings. FIG. 9 is a flowchart for explaining an address conversion processing and a forwarding processing by the gateway GW-B,

The gateway GW-B receives the IP packet for the host "video" relayed from the gateway GW-A in step S304 through the packet transmission/reception section 200 (S3050). At this time, the tunnel number through which the packet has been received is stored as "B" (S3051). The packet transmission/reception section enquires the counter GW corresponding to the destination address "V-VCR" of the received IP packet from the group member list management section 210. The global list includes description of the correspondence between the virtual IP address and the counter GW. Accordingly, the group member list management section 210 can refer to the global list to learn the counter GW corresponding to the destination address "V-VCR" of the received IP packet.

Further, the local list includes description of the correspondence among the actual IP address, counter GW, and virtual IP address of the host.

Accordingly, the group member list management section 210 can refer to the local list to learn the actual IP address "R-VCR" corresponding to the just-found counter GW (tunnel number "B") and the destination IP address (virtual IP address "V-VCR") of the received IP packet. This indicates that the corresponding entry exists in the local list (S3053: Yes). The found actual IP address "R-VCR" is forwarded to the NAT processing section. Note that if the corresponding entry does not exist in the local list (S3053: No), the IP packet is discarded (S3056).

The NAT processing section 250 converts (replaces) the destination IP address (virtual IP address "V-VCR") of the received IP packet into (with) the found actual IP address "R-VCR" (S3054) Then, the NAT processing section transmits the IP packet that has undergone the conversion to the parents' net (S3055).

As described above, the gateway GW-B relays the IP packet for the host "video".

### (Transmission processing by the host "video")

As shown in FIG. 7, the host "video" creates and transmits an IP packet (response packet) for the host "mypc" whose source IP address is the actual IP address "R-VCR" of the host "video" and whose destination IP address is the virtual IP address "V-PC" (source IP address of the received IP packet) (S306).

### (Address conversion processing and forwarding processing by the gateway GW-B)

Next, FIG. 7 will be used to describe in detail the address conversion processing (S307) performed by the-gateway GW-B.

The IP packet from the host "video" passes through the gateway GW-B without exception. The gateway GW-B receives the IP packet (S3070) . The gateway GW-B judges whether the destination IP address (DA) of the received IP packet exists in the global list or not (S3071). If the destination IP address (DA) does not exist in the global list (S3071: No), the IP packet is discarded (S3072).

On the other hand, if the destination IP address (DA) exists in the global list (S3071: Yes), the counter GW (tunnel number) corresponding to the destination IP address (virtual IP address "V-PC" of the host "mypc") of the received IP packet is read out from the global list, and stored as "A" (S3072).

Next, the local list is searched for an entry corresponding to the just-stored "A" and the source IP address (actual IP address "R-VCR" of "video") of the IP packet received in S1080 (S3073). If the result indicates that the corresponding entry does not exist in the local list (S3074: No), the IP packet is discarded (S3072) .

On the other hand, if the corresponding entry exists in the local list (S3074: Yes), the source IP address (actual IP address "R-VCR" of "video") of the IP packet received in S3070 is converted into (replaced with) the virtual IP address within the entry (that is, the virtual IP address "V-VCR" corresponding to the just-stored "A" and the source IP address (actual IP address "R-VCR" of "video") of the IP packet received in S3070) (S3075). The IP packet that has undergone the conversion is transmitted through the tunnel "A" (S3076) .

As described above, the host "video" transmits the IP packet for the host "mypc" , and the gateway GW-B performs address conversion on the IP packet for the host "mypc" and relays the IP packet that has undergone the conversion.

### (Address conversion processing and forwarding processing by the gateway GW-B)

Next, description will be made of the receive processing by the gateway GW-A.

The gateway GW-A receives the IP packet for the host "mypc" relayed from the gateway GW-B in step S3076. The packet transmission/reception section 200 enquires the counter GW corresponding to the source address "V-VCR" of the received IP packet from the group member list management section 210. The global list includes description of the correspondence between the virtual IP address and the counter GW. Accordingly, the group member list management section 210 can refer to the global list to learn the counter GW corresponding to the source address "V-VCR" of the received IP packet.

Next, the group member list management section 210 refers to the local list. The local list includes the description of the correspondence among the actual IP address, counter GW, and virtual IP address of the host. Accordingly, thegroupmemberlistmanagement section 210 can refer to the local list to learn the actual IP address "R-PC" corresponding to the just-found counter GW (tunnel number) and the destination IP address (virtual IP address "V-PC") of the received IP packet. The found actual IP address "R-PC" is forwarded to the NAT processing section 250.

The NAT processing section 250 converts the destination IP address (virtual IP address "V-PC") of the received IP packet into the found actual IP address "R-PC" (S308). Then, the NAT processing section transmits the IP packet that has undergone the conversion to the home net (S309).

As described above, the gateway GW-A relays the IP packet for the host PC.

### (Third embodiment)

Next, the drawings are referenced to describe a network system including a gateway (referred to also as "GW" or "gateway device") according to a third embodiment of the present invention.

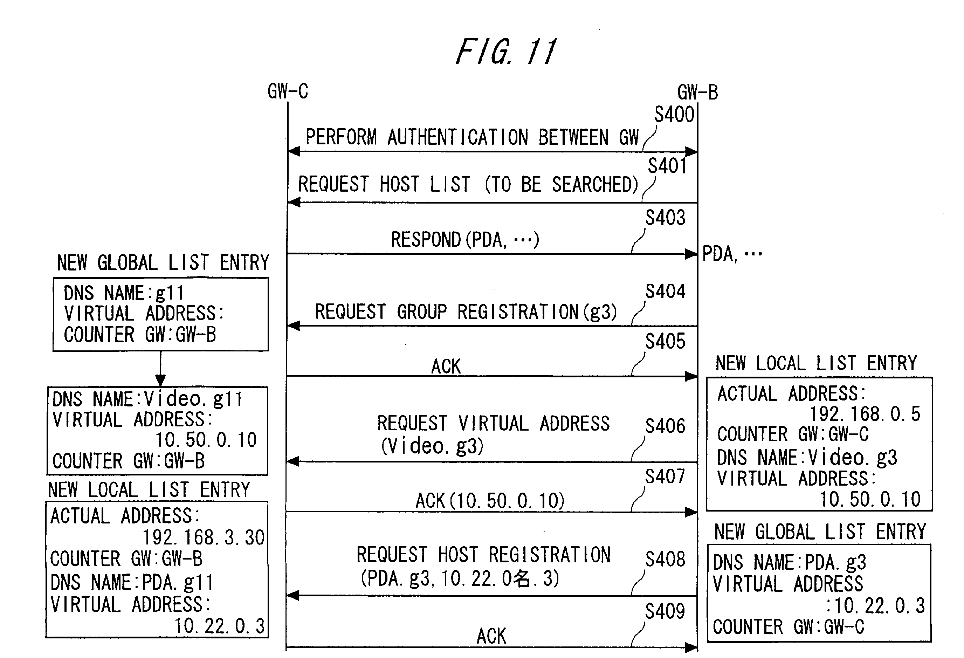

In the above second embodiment, it is necessary for a network administrator to perform manual setting to establish a tunnel connection between gateways or create the global/local list. In this embodiment, description will be made of means for automating the setting with reference to the drawings. Herein, the description will be made of an example of using a protocol for transmitting/receiving the setting information between gateways, as such means. FIG. 11 is a sequence chart of the processing using the protocol.

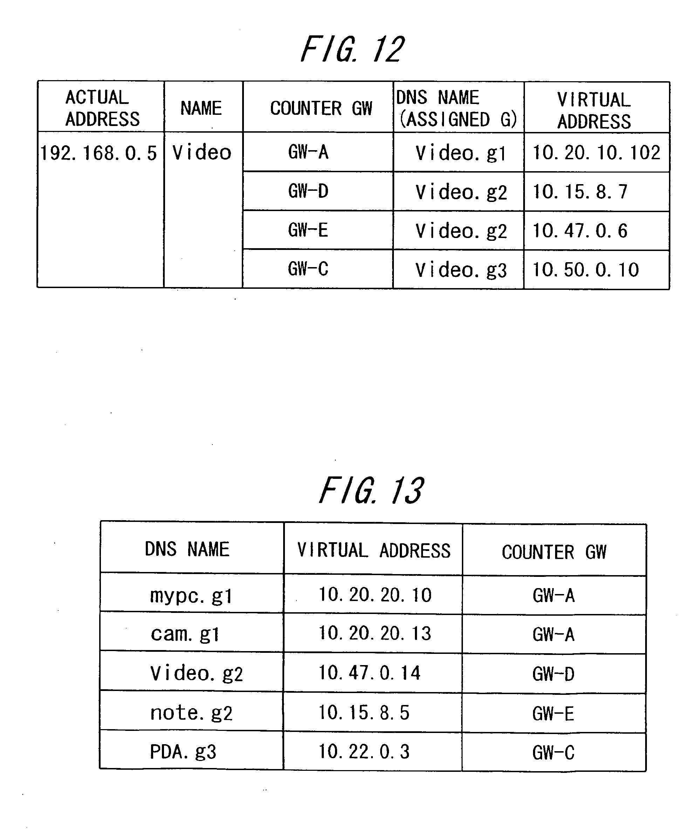

Hereinafter, consideration will be made to the protocol for leading the gateway GW-B to create a group "g3" including the host "video" belonging to the gateway GW-B and a host called "PDA" belonging to a gateway GW-C.
1. (Authentication between gateways)
   Gateways first use an existing authentication method (for example, authentication method using an ID with a password and the like) to authenticate whether they are reliable GWs for each other (S400). In general, the authentication between gateways is a desired processing, but unless necessary, the step may be omitted (optionally)
2. Next, if the gateway GW-B does not know the host belonging to the gateway GW-C, the gateway GW-B requests a list of hosts from the gateway GW-C in order to learn the host or searches for the host by using some keyword) (S401). This step may be omitted (optionally) if the gateway GW-B knows the name of the host. Upon reception of the request for the list from the gateway GW-B, the gateway GW-C returns the list of hosts subordinate thereto (including the host name "PDA") to the gateway GW-B of the request origin (S403) .
3. Based on the host list from the gateway GW-C, the gateway GW-B learns that there is a host subordinate to the gateway GW-C which has the host name "PDA". To realize formation of a new group "g3" including the host "PDA" and "video" subordinate to the gateway GW-B itself, the gateway GW-B newly creates a new entry for the group "g3" in association with the host called "video". The gateway GW-B simultaneously creates by itself a virtual network address that is convenient for itself when assigned to the group "g3". Herein, a network "10.22.0.0/24" is newly created.
   Next, to cause the gateway GW-C to create a group corresponding to the newly-created group "g3" as well, a group registration request is transmitted to the gateway GW-C (S404). The gateway GW-C that has received the request returns ACK to the gateway GW-B (S405), while creating a group by selecting its name that is convenient on the local network. Herein, a group name "g11" is assigned, and a network address "10.50.0.0/24" is also assigned at the same time.
   Note that the group names different between the gateways GW-B and GW-C are selected herein, but the same name between the two gateways may be selected and created. The selection/creation in that case can be realized by repeating request/response by protocol to select a group name unique to each other or by including a list of convenient names in messages transmitted from one to another from which the selection is to be made.
4. The gateway GW-B requests the gateway GW-C to assign a virtual IP address to the host having the name "video" as the host belonging to the group "g3" (S406). The gateway GW-C assigns an address "10.50.0.10" to "PDA. g11" on an address space "10.50.0.0" created for the group "g11" , and returns this to the gateway GW-B (S407) . The gateway GW-B that has received the response creates the virtual IP address "10.50.0.10" having a new name "video.g3" as a local list entry (see FIG. 12).
5. Finally, the gateway GW-B assigns "PDA. g3" with a new address "10.22.0.3" from the address space "10.22.0.0/24", adds a new entry to the global list entry (see FIG. 13), and notifies the gateway GW-C thereof as a virtual IP address (S408). Upon reception thereof, the gateway GW-C newly adds this entry to the existing local list. Upon creation thereof, the gateway GW-C returns an Ack message to the gateway GW-B (S409).

Note that the procedural steps from S400 to S409 are a mere example. For example, the procedural steps 4. and 5. may be changed in order. Further, a plurality of procedural steps described above may be transmitted in a single message. Further, all kinds of existing protocols can be used for a transport layer. HTTP and SIP can be used. Further, it is possible to use XML as a message format, use SOAP to encapsulate the message, and transmit the message via such transport protocols.

Further, the protocol may be used for the tunnel connection, and after authentication is established between gateways, a tunnel can be created at an arbitrary time prior to the start of communications. Further, to add a new host to an already-existing group as a group member, the procedural step 3. is skipped. Further, although the settings between two pairs of gateways are shown in this embodiment, there are no limitations to the two pairs. By operating the protocol between arbitrary gateways, it is possible to automate the setting of groups and their members between an arbitrary number of pairs of gateways.

### (Fourth embodiment)

Next, the drawings are referenced to describe a network system including a gateway (referred to also as "GW" or "gateway device") according to a fourth embodiment of the present invention.

In this embodiment, the gateway (GW) is connected with a device (non-IP terminal) having no IP communication function. The non-IP terminal has a function of being controlled by transmitting/receiving any command in a text format or a binary format to/from the gateway (GW).

In such a case, similarly to the assignment of virtual IP addresses, a virtual IP host is virtually created at the gateway (GW), is assigned with a virtual IP address, and terminates TCP/IP communications from the outside, which can realize the transmission/reception of a command by using a TCP/IP network.

For example, the existing protocol such as telnet or HTTP is used, a remote host transmits a command, telnet or HTTP is terminated at the gateway (GW), and a command portion is extracted followed by retransmission to the non-IP host, whereby the remote host is capable of performing control/communications as if it were performing communications with an IP host.

If the gateway (GW) assigns virtual IP addresses by the number of such non-IP terminals, it is possible to receive non-IP terminals whose number corresponds to the number of private IP addresses, and to realize the grouping in a quite similar manner.

### (Fifth embodiment)

Next, the drawings are referenced to describe a network system including a gateway (referred to also as "GW" or "gateway device") according to a fifth embodiment of the present invention.

Normally, a protocol for automatically assigning IP addresses such as DHCP (Dynamic Host Configuration Protocol) operates in a local network, so IP addresses assigned to a host are not always the same. In such an environment, an IP address is inappropriate for an ID identifying an individual IP host.

According to the present invention, the IP address of a communication destination is set as a virtual IP address to hide the actual IP address. This setting is realized by mapping actual addresses and virtual IP addresses in a local list. This eliminates an influence from such a change in actual IP addresses due to DHCP if only the mapping between individuals and virtual IP addresses can be maintained even with actual addresses being varied.

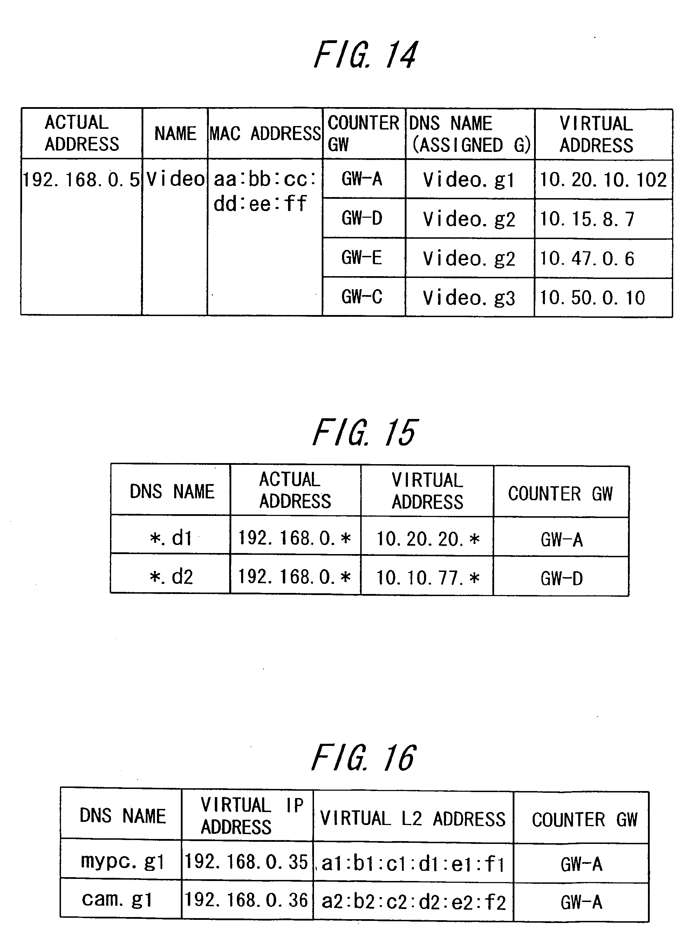

For example, if individual identification based on a MAC address is used in the gateway (GW), the mapping between individuals and virtual IP addresses can be maintained irrespective of actual IP addresses. This maintenance can be realized by adding a field for a MAC address to an entry of the local list in the gateway (GW) (see FIG. 14). This produces the above-mentioned effect as long as MAC addresses of the local list are always referenced to identify the individuals even with actual addresses varied.

For example, the individual called "video" can be identified uniquely by a MAC address"aa:bb:cc:dd:ee:ff". This identification can be realized by obtaining the value through an ARP response and inputting the value to the local list if Ether is used for communications between the gateway (GW) and "video".

Even if DHCP is used or if the change in IP address assignment causes a change in actual address, since MAC addresses are unchangeable, it is sufficient that values of a table are managed/maintained based on the values of the MAC addresses.

### (Sixth embodiment)

Next, the drawings are referenced to describe a network system including a gateway (referred to also as "GW" or "gateway device") according to a sixth embodiment of the present invention.

When a virtual group is composed of hosts belonging to quite different networks, the correspondences between names and virtual IP addresses and between virtual IP addresses and actual addresses have no specific pattern. However, in the case where, for example, all hosts belonging to a given subnet are formed into a virtual group, the rule of conversion is available, which greatly reduces the number of entries.

Herein, instead of performing the management of DNS names, gateway uses the existing technique such as a DNS relay to enquire of a system for collective management. Thegateway (GW) ispreviously provided with an address of the DNS server to be enquired of. Next, the global list includes description of a pattern for converting domain names into actual addresses and a pattern for converting actual addresses into virtual IP addresses (see FIG. 15).

The symbol "*" in this table represents an arbitrary value, and further represents that data matching the value is used as it is. For example, if the IP address of "video.d1" is enquired of the DNS server and if "192.168.0.17" is returned; it is meant that the first "*" in the global list is hit, and the virtual IP address for this case is converted into "10.20.20.17".

By having such a list, in the case of registering a continuous address space in the list, it is possible to greatly reduce the processing time for searching the list and resources for composing the list.

### (Seventh embodiment)

Next, the drawings are referenced to describe a network system including a gateway (referred to also as "GW" or "gateway device") according to a seventh embodiment of the present invention.

The gateway can let a host know that a given group virtually exists in virtually the same subnet. According to the above-mentioned embodiments, it appears to a host that the host always accesses a group through a gateway. According to this embodiment, it can be made to appear that hosts belong to the same subnet on the L2 level of Ether.

It is now assumed that two hosts exist in the group "g1" and belong actually to different remote gateways, and consideration will be made to the case where the two hosts are made to perform communications with the host "video" existing on the network "192.168.0.0/24" that is the same local subnet as if the two hosts were performing communications with a host belonging to the same subnet.

It is assumed that a new field of a virtual layer-2 address is added to the global list used in the above-mentioned embodiments, and that "mypc" and "cam" are assigned with the layer-2 addresses "a1:b1:c1:d1:e1:f1" and "a2:b2:c2:d2:e2:f2", respectively, so as not to overlap the other host (see FIG. 16). Further, virtual IP addresses are assigned similarly to the above, and the same subnet address as the host "video" is assigned herein.

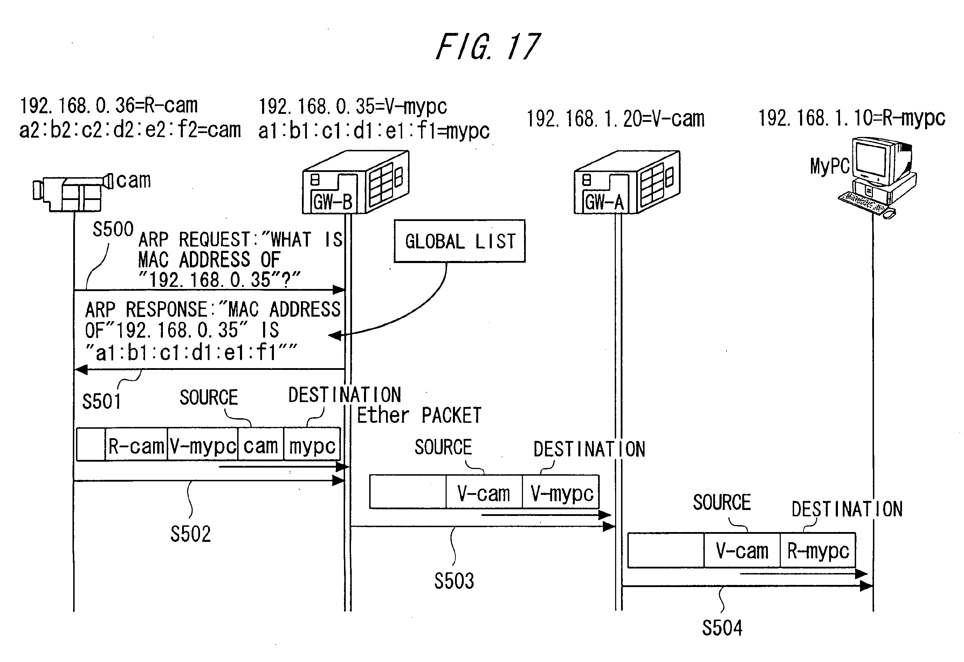

As shown in FIG. 17, before starting the transmission of an IP packet from "cam" to "mypc", an ARP request is transmitted (S500) . The gateway GW-B returns the address "a1: b1: c1: d1: e1: f1' in response to the ARP request in place of "mypc" as if the gateway GW-B were virtually "mypc" (S501). At this time, reference is made to the global list shown in FIG. 16. Thus, "cam" learns the layer-2 address of "mypc" , and accordingly starts to transmit the IP packet actually to the gateway GW-B via the L2 layer (S502).

Upon reception of the L2 packet, the gateway GW-B refers to the global list to recognize that the L2 packet destined to the destination "a1:b1:c1:d1:e1:f1" virtually exists as "mypc" in the gateway GW-A, so the L2 packet can be terminated. The subsequent processing is the same as the above, whereby the IP packet is forwarded to the gateway GW-A (S503). Similarly to the above-mentioned embodiments, the gateway GW-A receives the IP packet, performs address conversion thereon, and forwards the IP packet that has undergone the conversion to "mypc" subordinate to the gateway GW-A itself (S504).

In addition, to transmit the packet received from "mypc" to "cam", the gateway GW-B finishes the address conversion similarly to the above-mentioned embodiments, and finally, upon transmission to the local network, transmits the L2 packet to "mypc" on the L2 network with "a1:b1:c1:d1:e1:f1" attached as the source layer-2 address.

As a result of the above procedure, the gateway can provide the function of causing arbitrary hosts to perform communications as the hosts belonging to virtually the same subnet.

### (Modified example)

It is described in conjunction with the above-mentioned embodiments that the IP addresses are addresses based on IPv4, but the present invention is not limited thereto. For example, it is possible to use addresses based on IPv6. In this case, the implementation is possible by using site local addresses based on IPv6 instead of private addresses based on IPv4. For example, if the wording "private (address) is replaced with the wording "site local (address) "in the above-mentioned embodiments, the procedural steps and the processing methods are quite the same, and there is no need to consider the difference between IPv4 and IPv6 for implementing the present invention. Note that the global address also has the same meaning as those of IPv4 and IPv6.

It is possible to implement the present invention in other various forms without departing from the spirit or the fundamental features. Therefore, the above-mentioned embodiments are mere examples in every aspect, and will not be construed restrictively.

### INDUSTRIAL APPLICABILITY

According to the present invention, it is possible to implement the closed communications within a group without increasing the processing loads on the hosts poor in communication /calculation resources (household electrical appliances compatible with network communications, which includes a mobile terminal such as a mobile phone and a PDA (Personal Digital Assistance), an air conditioner, a washing machine, and a video cassette recorder.

## Claims

1. A packet relay apparatus located at a boundary between a local network and a global network in an IP network composed of IP hosts having global addresses, in which arbitrary hosts are selected and formed into a group to implement closed communications within the group, comprising:
a list including IP addresses and host names for managing the group to manage hosts belonging to the group; and
means for discriminating between a host that is a group member and an outside host of the group based on the list to block communications from the outside host of the group.

2. A packet relay apparatus according to claim 1 , further comprising a converter for converting a global address and a private address into each other.

3. A packet relay apparatus according to claim 2, wherein a virtual private address with respect to a virtual IP subnet is assigned to an arbitrary host.

4. A packet relay apparatus according to claim 2 or 3, further comprising means for encrypting communications performed with a different packet relay apparatus.

5. A packet relay apparatus according to any one of claims 2 to 4, further comprising means for automating tunnel setting performed with a different packet relay apparatus via a predetermined tunnel protocol.

6. A packet relay apparatus according to any one of claims 2 to 5, further comprising means for automating group setting performed with a different packet relay apparatus via a virtual group setting protocol.

7. A packet relay apparatus according to any one of claims 2 to 6, further comprising means for automating setting of members belonging to the group performed with a different packet relay apparatus via a virtual group setting protocol.

8. A packet relay apparatus according to any one of claims 5 to 7, further comprising means for checking whether the packet relay apparatus and a different packet relay apparatus are reliable to each other or not by authenticating between the relay apparatus and the different packet relay apparatus.

9. A packet relay apparatus according to claim 2 or 3, wherein the packet relay apparatus and a host are directly connected to each other without connection to other hosts.

10. A packet relay apparatus according to claim 3, wherein a virtual IP host is created for causing a non-IP terminal to appear to other hosts in a manner that the non-IP terminal exists virtually as an IP host in the group.

11. A packet relay apparatus according to claim 3, wherein layer-2 address of each of the hosts are associated with a machine as identifiers unique to the host on a one-to-one basis.

12. A packet relay apparatus according to claim 3, wherein a virtual layer-2 address are used to respond to ARP in place of one of the hosts belonging to the group, thereby implementing intra-group communications on a local subnet level.

13. A packet relay apparatus according to any one of claims 1 to 3, wherein name resolution is not performed in a gateway, names are collectively resolved in a DNS server, and conversion between actual addresses and virtual private addresses is described in patterns.

14. An IP packet relay apparatus provided between networks, through which an IP packet relating to a host belonging to a specific group passes, comprising:
a list in which an IP address possessed by a host is associated with a group identifier for identifying a group to which the host belongs;
judgment means for judging whether an IP packet that has received from one network and is addressed to a host connected to another network is an IP packet relating to the same group or not with reference to the list; and
forwarding means for relaying an IP packet judged to be the IP packet relating to the same group to the another network.

15. An IP packet relay apparatus according to claim 14, wherein the judgment means refers to the list, and in a case where groups corresponding to a source address and a destination address of the IP packet that has reached from the one network are the same, judges that the IP packet is the IP packet relating to the same group.
